# EUROPEAN PATENT APPLICATION

(11) **EP 4 083 741 A1**
(43) Date of publication of application: **02.11.2022**
(21) Application number: 22166421.2
(22) Date of filing: 03.04.2022
(51) Int. Cl.: G05D 1/02, A01D 34/00, B60L 53/36

(54) **METHOD AND SYSTEM FOR CHARGING A ROBOTIC WORK TOOL**

(30) Priority: 30.04.2021 SE 2150550
(71) Applicant: HUSQVARNA AB, 561 82 Huskvarna (SE)
(72) Inventor: ÄRLIG, Ulf, 564 35 BANKERYD (SE); KVIST, Johan, 571 42 NÄSSJÖ (SE)

(57) **Abstract**

A method for charging a self-propelled robotic work tool (1) in a charging station (4), comprises the steps of: the robot (1) navigating towards a charging position in the charging station (4), and sensing an attaining of a predetermined charging position of the robotic work tool (1) in the charging station (4). A charging position sensor (6a) and a sensed feature (6b) are arranged in the self-propelled robotic work tool (1) and the charging station (4). A charging procedure is initiated once said charging position is attained, and the sensor (6a) detects the sensed feature (6b) in a contactless manner.

A system includes a charging station (4) and a robotic work tool (1), which each comprises one of a sensor (6a) and a sensed feature (6b), respectively, as well as first and second charging means (5a, 5b). The sensor (6a) and sensed feature (6b) are arranged for contactless detection.

A robotic work tool (1) for use in the system comprises a charging position sensor (6a), a chargeable battery, and a charging means (5a).

## Description

### Field of the invention

The present invention relates to a method for charging a self-propelled robotic work tool in a charging station, comprising the steps of: the robot navigating towards a charging position in the charging station, sensing the attaining of a predetermined charging position of the robotic work tool in the charging station, by means of a charging position sensor in one of the self-propelled robotic work tool and the charging station and a sensed feature associated with the other of the self-propelled robotic work tool and the charging station.

The invention also relates to a system for autonomous operation of a self-propelled robotic work tool, the system including a charging station and a robotic work tool, and the charging station and the robotic work tool each comprising one of a sensor and a sensed feature, respectively, and first and second charging means, respectively.

In a further aspect, the invention also relates to a robotic work tool for use in the above system, comprising a charging position sensor for positioning the robotic work tool in a charging station, a chargeable battery, and a charging means.

### Background

WO2019/223720 discloses an automatic system comprising a self-moving device and a base station. Two or more positioning apparatuses are arranged in the self-moving device for detecting positioning marks on a plate in the base station. An accurate docking may be attained.

EP2648307B1 discloses a method and a system for docking a robot in a docking station. The robot comprises signal transceivers, which are connected to the charging contacts. When the contact between the charging contacts in the docking station and the robot, respectively, is sufficient a signal from one charging contact may reach the second charging contact in the robot, and the charging station will be instructed to increase the current through the charging contacts above the signal current, so that an efficient charging may be performed.

EP2960100B1 discloses a robotic lawn mower system wherein a proper contact between the charging contacts of the robot and the base station is verified, and then the maximum charging voltage is switched on.

These and other documents disclose robotic work tools docking into a charging station. A prevailing problem is that the charging contacts may be unduly worn if the charging starts at a time when the charging contacts are not aligned in a suitable position. The wear may be due to excessive heating and spark formation when the contact is insufficient. The problem may persist even when only a reduced signal current is transferred between the charging contacts before the actual charging starts.

### Summary

It is an object of the present invention to solve, or at least mitigate, parts or all of the above-mentioned problems. To this end, there is disclosed a method for charging as outlined in the introduction, wherein initiating a charging procedure is performed once said charging position is attained, and said sensor detects said sensed feature in a contactless manner.

Hereby the possibility of ensuring that the robotic work tool is in a suitable position, before the charging starts, may be provided. The charging procedure does not start before the correct position has been attained. In other words, the charging contacts of the charging station are not energized until the charging procedure is initiated. A favorable consequence is that the risk of undue wear on the charging contacts, both in the charging station and in the robotic work tool, is minimized or even completely eliminated. This effect may be due to a lower incidence of heating and formation of sparks, which may otherwise arise, if the two sets of charging contacts are not in a complete alignment and contact with one another during the charging.

In an embodiment the sensor is arranged in the robotic work tool and initiates said charging procedure.

Hereby may be attained that the robotic work tool may detect, and direct itself into, an efficient charging position with a high precision. In some cases, the arrangement of a sensor in the charging station may be an opposite of the arrangement of an emitter in the charging station.

In another embodiment the initiation of the charging procedure comprises transferring information via a short range, wireless interface.

Hereby the robotic work tool may be able to navigate into the optimal charging position in the charging station with the aid of the second positioning device, which is arranged in the robotic work tool. On attaining the correct position, the robotic work tool may be able to send information wirelessly of its position, so that the charging may start. One example of a wireless interface is Bluetooth.

In another embodiment, the sensing is based on emanated magnetic fields.

Hereby a number of practical and cost effective solutions may be realised.

In another embodiment, the sensed feature is a magnet, and the sensor is a Hall sensor.

Hereby the position which is to be attained may be defined by a magnetic field while the mobile, robotic work tool may orient and align itself in relation to this field, which preferably is constant over time and fixed relative to the charging station. Also, the magnetic field may be constant over time, and independent of any electricity, in contrast to an electro-magnet or to any other form of electrically generated magnetic field. Further, the magnetic field emanating from a permanent magnet may be nonuniform in space, but the spatial arrangement of its field strength may be utilized for a high precision orientation in the field. Hence the positioning of a robotic work tool in relation to any part of the charging station may be performed with a very high precision.

In another embodiment the sensor is a 3D magnetic sensor.

Hereby yet another alternative for the sensor is presented.

In a further embodiment, sensing the attaining of the charging position of the robotic work tool comprises sensing a magnetic field above a threshold value and thereafter initiating the charging procedure.

In another embodiment wherein the sensing of the position of the robotic work tool comprises sensing a peak in the magnetic field as the robotic work tool moves, and thereafter initiating the charging procedure.

In the second aspect of the disclosure, the sensor and sensed feature are arranged for contactless detection, and the charging station and the robotic work tool and the charging station are arranged for initiating a charging procedure when a charging position has been attained.

Hereby, the charging contacts may be kept completely de-energized when a charging is not taking place, as the detection of the correct position is not dependent on any form of electric signals through the charging contacts.

In an embodiment of the second aspect, the sensor is arranged in the robotic work tool.

Hereby the sensed feature may be arranged in the charging station. Despite this, the sensed feature need not be energized, but may be a passive emitter. The robotic work tool may navigate with the aid of its sensor in relation to the sensed feature, without explicit directions from the charging station.

In a further embodiment, a short range, wireless interface transceiver is arranged in each of the robotic work tool and the charging station.

Hereby, the robotic work tool and the charging station may communicate wirelessly so that the information of the attained correct charging position may be transferred, and the charging procedure initiated. The charging procedure comprises the energizing of the charging contacts with a full charging power. The robotic work tool may maneuver itself into an optimal position for receiving a charging current, i. e. a position with an optimal contact between the charging contacts of the charging station and of the robotic work tool, respectively. In such a position the risk of undue wear and/or the formation of sparks is minimized. Thereafter, when a sufficient contact with the charging contacts has been attained, the robotic work tool will confirm this to the charging station, by sending a message wirelessly to the first communication means, which may in its turn instruct the control means to switch on the charging voltage. The transceiver may be a Bluetooth transceiver.

In another embodiment sensing is based on emanated magnetic fields.

Hereby the sensed feature may in some variants be passive, i. e. working independently of an energy supply. In other variants the sensor and the sensed element may be easy to construct and integrate into the electric systems of the robotic work tool and the charging station.

In a further embodiment the sensor is a Hall sensor, and the sensed feature is a magnet.

In yet another embodiment the sensor is a 3D magnetic sensor.

Hereby one possible practical configuration of a sensor and a passive sensed feature may be attained.

In a third aspect of the disclosure, the charging position sensor is arranged for contactless detection of a sensed feature, and the robotic work tool is arranged for initiating a charging procedure when a charging position has been attained.

In an embodiment of the third aspect, the robotic work tool further comprises a short range, wireless interface transceiver for communication with the charging station.

Hereby, when the robotic work tool has navigated into the optimal charging position in the charging station with the aid of the charging position sensor, which is arranged in the robotic work tool. On attaining the correct position, the robotic work tool may be able to send information wirelessly of its position, so that the charging may start. The transceiver may be a Bluetooth transceiver.

In a further embodiment, the sensor is a Hall sensor.

Hereby the robotic work tool may be able to sense a magnet in the charging station, to be able to find the optimal position for charging. The magnet need not be energized in order to emit a magnetic field, that may be sensed by the Hall sensor.

In another embodiment, the sensor (6a) is a 3D magnetic sensor.

In yet another embodiment the charging position sensor is arranged between a set of contacts in the charging means.

Hereby the distance between the positioning device and the actual intended points of contact on the charging contacts is minimized, and the positioning of the robotic work tool may be performed with a maximal precision. Small angular deviations in the sensing of the sensing feature by the sensor are kept small also regarding the mutual positions of the charging contacts in the robotic work tool and the charging station. Such deviations are not unduly enlarged by a large distance between the sensor and the charging contacts to be positioned.

It is noted that embodiments of the invention may be embodied by all possible combinations of features recited in the claims. Further, it will be appreciated that the various embodiments described for the system and the robotic work tool are all combinable with the method as defined above, and vice versa.

### Brief description of the drawings

The above, as well as additional objects, features and advantages of the present disclosure, will be better understood through the following illustrative and non-limiting detailed description of preferred embodiments of the present disclosure, with reference to the appended drawings, where the same reference numerals will be used for similar elements, wherein:
- Fig. 1: is a diagrammatic view from above of a work area with a robotic work tool and a charging station;
- Fig. 2a: is a perspective view of a charging station and a robotic work tool;
- Fig. 2b: is a view according to Fig. 2a of the robotic work tool only;
- Fig. 3: is a schematic view from the side of the robotic work tool and the charging station; and
- Fig 4: is a flowchart of a method for charging the robotic work tool according to the disclosure.

All the figures are schematic, not necessarily to scale, and generally only show parts which are necessary in order to elucidate the embodiments, wherein other parts may be omitted.

### Detailed description of the exemplary embodiments

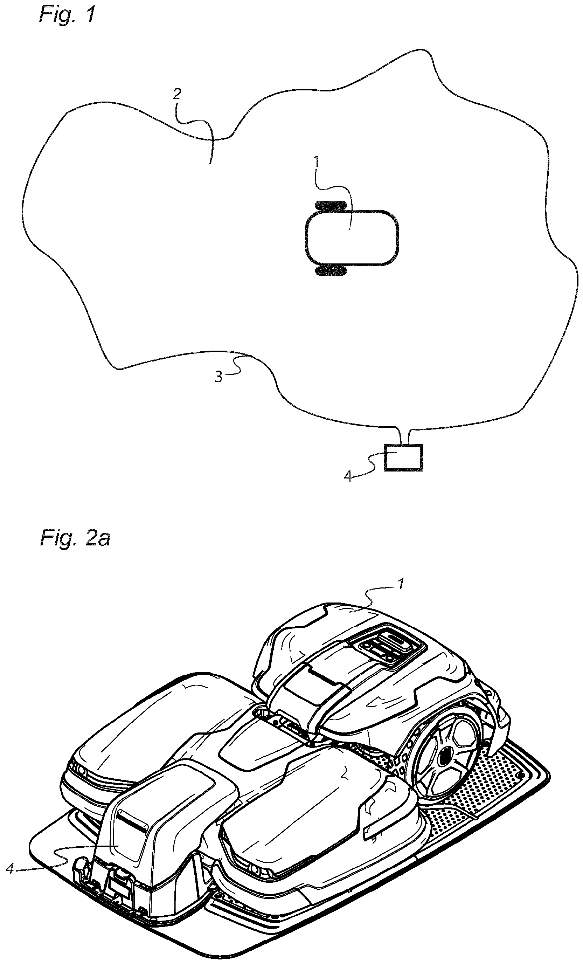

Fig. 1 illustrates a robotic work tool 1 according to the disclosure, working in a work area 2. The work area 2 is delimited by a boundary cable 3 in the embodiment disclosed in Fig. 1, but other means of defining the work area 2, e. g. physical boundaries, such as walls, or satellite navigation, such as GPS, may be used in some embodiments.

The robotic work tool 1 is propelled by an electric motor powered by a battery, which may be charged in a charging station 4 somewhere in or near the work area 2. When the battery in the robotic work tool 1 is running low, the robotic work tool 1 may navigate back to the charging station 4 according to any procedure known in the art, i. e. with the aid of the boundary cable 3, a guide wire, satellite navigation, etc.

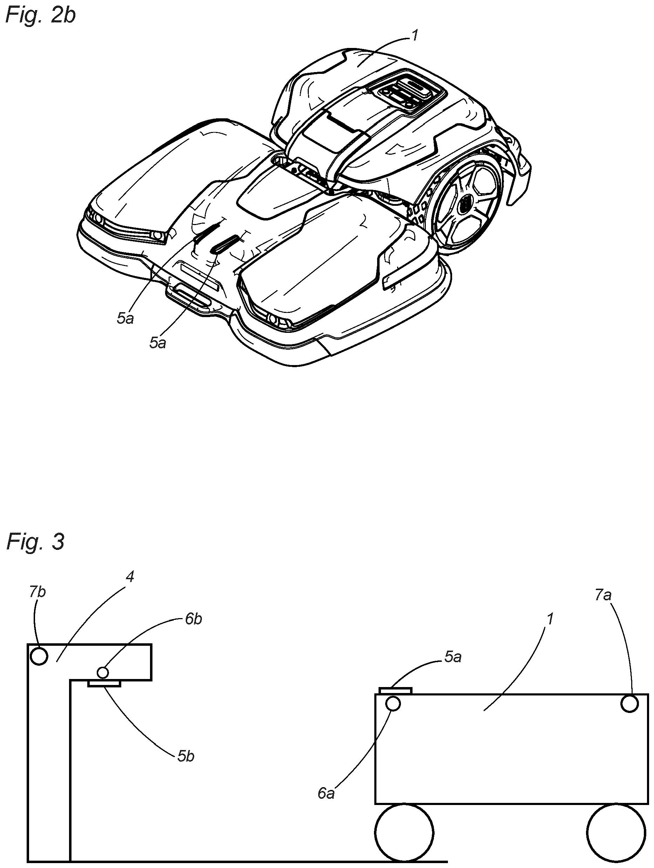

When the robotic work tool 1 has reached the charging station 4, it may dock therewith, as shown in Fig. 2a. The charging contacts 5a, see e. g. Fig. 2b, of the robotic work tool 1 need to come into contact with the corresponding charging contacts of the charging station 4, for a charging to take place.

The navigation procedures that may direct the robotic work tool 1 to the charging station 4 are usually not accurate enough to direct the robotic work tool 1 into a position where the charging contacts are in perfect contact with one another, which has hitherto involved the problems mentioned above in relation to the prior art.

In a disclosed embodiment, shown schematically in Fig. 3, the robotic work tool 1 is provided with a sensor 6a for sensing a sensed feature 6b, which is provided in the charging station 4. Various types of sensors 6a may be used, as long as they are adapted to sensing the sensed feature 6b in the charging station 4. Some embodiments utilize an optical sensing, such as the scanning of a barcode etc., sensing a LED light, or the like. Under certain circumstances, acoustic sensing, Doppler technology, etc. may be utilized. In further embodiments the sensed feature 6b may be a magnet, preferably a permanent magnet. A permanent magnet 6b need not be supplied with electricity in order to emanate a magnetic field and may hence work independently of an electric supply. However, other embodiments where a sensing of electromagnetic fields is utilized, e. g. by induction, a resonant circuit etc. are also possible variations.

In some advantageous embodiments, where the sensed feature 6b is a magnet, the sensor 6a is a Hall sensor.

Regardless of the type of sensor 6a and sensed feature 6b used in many embodiments of the disclosure, they may be arranged in a similar way in most cases. The sensor 6a may sense the sensed feature 6b at some distance away. Preferably the sensor 6a is adapted to the size and position of the sensed feature 6b, as well as to its field strength and the configuration of the field. The sensor 6a may be adapted to sense a threshold value of the sensed feature 6b, as a basis for the determination that the robotic work tool 1 has reached a correct charging position, where the charging contacts 5a, 5b are in close contact with one another. In other embodiments of the system, the sensor 6a is adapted to sense a peak in the sensed value. In this case the sensor 6a may sense an increase in the sensed value as the as the robotic work tool 1 moves closer 1 to the ideal charging position, and a decrease as the robotic work tool 1 moves away therefrom after passing it. The ideal mutual position of the charging contacts 5a, 5b should be arranged to coincide with a position of the robotic work tool 1 where the peak in the sensed value occurs.

The sensor 6a and the sensed feature 6b need not necessarily be arranged close to the charging contacts 5a, 5b in all embodiments. As long as the respective distances between the sensor 6a and the sensed feature 6b to their respective charging contacts 5a, 5b are known and rigid, a reasonable positioning is achievable. However, the accuracy in the positioning of the robotic work tool 1 in the charging station 4 may be maximised if the distance between the sensor 6a and the charging contacts 5a and the sensed feature 6b and the charging contacts 5b in the charging station, respectively, is kept low. Typically, any angular deviations in the mutual positioning of the sensor 6a and the sensed feature 6b may be more noticeable at an increased distance therefrom. Such deviations may cause a less than optimal contact between one or both pairs of charging contacts 5a, 5b. In a favorable embodiment of the disclosure, the sensor 6a and the sensed feature 6b are arranged between the charging contacts 5a, 5b on the robotic work tool 1 and the charging station 4, respectively. Of course a test signal can be applied to verify the positioning once the contactless sensing procedure has been concluded.

Neither the position nor the mutual close contact of the charging contacts 5a, 5b need be confirmed by a test current or a signal through the contacts 5a, 5b. The risks of excessive heating or sparks forming in case of an insufficient contact are hence eliminated, both by the enhanced positioning and by the fact that there is no voltage over the charging contacts 5a, 5b before the optimal charging position has been ascertained.

In a preferred embodiment, the robotic work tool 1 and the charging station 4 are provided with transceivers 7a, 7b, e. g. with a wireless interface such as Bluetooth or similar. Bluetooth may be useful for other purposes in the robotic work tool. Other suitable communication schemes include ANT and ZigBee, for instance. With the use of such transceivers 7a, 7b, information of a docking, i. e. of a successful positioning of the robotic work tool 1 in the charging station 4, may be transferred from the robotic work tool 1 to the charging station 4, or vice versa.

The unit carrying the sensor 6a, in a preferred embodiment the robotic work tool 1, is arranged to transfer the information of the attained charging position via the transceiver 7a to the transceiver 7b in the charging station 4. Such a transfer of information is arranged to take place as soon as the sensed feature 6b has been sufficiently confirmed, i. e. in dependence of the detection of a peak value or a threshold value. Also, the robotic work tool 1 may stop moving when the charging position has been attained, in order not to lose the mutual contact between the charging contacts 5a, 5b. Thereby the charging procedure is initiated. The charging station 4 is arranged to energize the charging contacts 5b, when it has received the information that the robotic work tool 1 is in its charging position, which implies that the charging contacts 5a, 5b are in sufficient mutual contact.

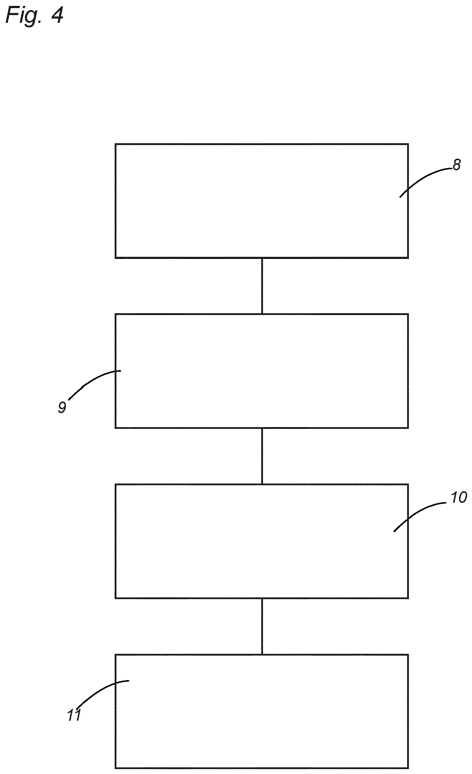

The method for charging the robotic work tool 1 is laid out schematically in Fig. 4. In step 8 the robotic work tool 1 is navigating towards the charging station 4 by any means known in the art, such as GPS, a guide wire etc.

In step 9, after the robotic work tool 1 has reached the charging station 4, the sensor 6a in the robotic work tool 1 starts detecting the sensed feature 6b. The robotic work tool 1 may move slowly and may adjust its position one or more times in order to find the optimal charging position, based on information from the sensor 6a.

In step 10, the charging position has been attained, and the sensor 6a detects the sensed feature to the highest degree, i. e. where a peak value of the sensed feature 6b is obtained. In some embodiments, this step 10 of the method involves sensing a threshold value of the sensed feature 6b, in order to attain the optimal charging position.

Step 11 is the initiation of the charging procedure. In this step 11, the transceiver 7a of the robotic work tool 1 wirelessly sends a confirmation signal to the transceiver 7b in the charging station 4. When the confirmation signal has been received, the charging station 4 is instructed to energize the charging contacts 5b. The charging contacts may not be energized before the confirmation of the attained charging position has been received, in order to ensure that the charging contacts 5b of the charging station 4 are in secure contact with the charging contacts 5a of the robotic work tool 1.

After the completion of step 11, the charging will take place according to any charging procedure known to the skilled person.

The invention has mainly been described above with reference to a few embodiments. However, as is readily appreciated by a person skilled in the art, other embodiments than the ones disclosed above are equally possible within the scope of the invention, as defined by the appended patent claims.

For example, the sensed feature 6b in the charging station 4 has been described as a passive feature, e. g. a magnet, which always emanates a magnetic field constantly over time, and independently of electricity. It is of course possible to use a sensed feature 6b which depends on electricity, such as an electromagnet, an LED, etc.

Another variation is that the sensor 6a is arranged in the charging station 4 and the sensed feature 6b is arranged in the robotic work tool 1. In some such embodiments, sending a wireless message between the charging station 4 and the robotic work tool 1 may be considered superfluous, since the sensor 6a in the charging station 4, may communicate directly with the control system energizing the charging contacts 5b in the charging station 4, without involving the robotic work tool 1. On the other hand, there may be embodiments with such an arrangement of the sensor 6a and the sensed feature 6b, where a wireless message to the robotic work tool 1 may be useful to transfer the information that the charging position has been attained. For example, the information may be used by the robotic work tool 1 in order to interrupt the search for a charging position, as soon as such a position has been attained.

In the claims, the word "comprising" does not exclude other elements or steps, and the indefinite article "a" or "an" does not exclude a plurality.

## Claims

1. Method for charging a self-propelled robotic work tool (1) in a charging station (4), comprising the steps of:
the robot (1) navigating (8) towards a charging position in the charging station,
sensing (9) an attaining of a predetermined charging position of the robotic work tool (1) in the charging station (4), by means of a charging position sensor (6a) in one of the self-propelled robotic work tool (1) and the charging station (4) and a sensed feature (6b) associated with the other of the self-propelled robotic work tool (1) and the charging station (4), wherein
initiating (11) a charging procedure once said charging position is attained (10),
and said sensor (6a) detects said sensed feature (6b) in a contactless manner.

2. Method according to claim 1, wherein the sensor (6a) is arranged in the robotic work tool (1) and initiates (11) said charging procedure.

3. Method according to claim 1 or claim 2, wherein the initiation (11) of the charging procedure comprises transferring information via a short range, wireless interface.

4. Method according to any of the preceding claims, wherein sensing is based on emanated magnetic fields.

5. Method according to any of the preceding claims, wherein the sensed feature (6b) is a magnet, and the sensor (6a) is a Hall sensor.

6. Method according to any of claims 1 to 4, wherein the sensor is a 3D magnetic sensor.

7. Method according to any of claims 4 to 6, wherein the sensing (9) of the attaining (10) of the charging position of the robotic work tool (1) comprises sensing a magnetic field above a threshold value and thereafter initiating (11) the charging procedure.

8. Method according to any of claims 4 to 6, wherein the sensing (9) of the position of the robotic work tool (1) comprises sensing a peak in the magnetic field as the robotic work tool (1) moves, and thereafter initiating (11) the charging procedure.

9. System for autonomous operation of a self-propelled robotic work tool (1), the system including a charging station (4) and a robotic work tool (1), and the charging station (4) and the robotic work tool (4) each comprising one of a sensor (6a) and a sensed feature (6b), respectively, and first and second charging means (5a, 5b), respectively, wherein the sensor (6a) and sensed feature (6b) are arranged for contactless detection, and the robotic work tool (1) and the charging station (4) are arranged for initiating a charging procedure when a charging position has been attained.

10. System according to claim 9, wherein the sensor (6a) is arranged in the robotic work tool (1).

11. System according to claim 9 or claim 10, wherein a short range, wireless interface transceiver (7a, 7b) is arranged in each of the robotic work tool (1) and the charging station (4).

12. System according to any of claims 9 to 11, wherein sensing is based on emanated magnetic fields.

13. System according to any of claims 9 to 12, wherein the sensor (6a) is a Hall sensor, and the sensed feature (6b) is a magnet.

14. System according to any of claims 9 to 12, wherein the sensor is a 3D magnetic sensor.

15. Robotic work tool for use in the system according to any of claims 9 to 14, comprising a charging position sensor (6a) for positioning the robotic work tool (1) in a charging station (4), a chargeable battery, and a charging means, wherein the charging position sensor (6a) is arranged for contactless detection of a sensed feature (6b), and the robotic work tool (1) is arranged for initiating a charging procedure when a charging position has been attained..

16. Robotic work tool according to claim 15, wherein the robotic work tool (1) further comprises a a short range, wireless interface transceiver (7a) for communication with the charging station (4).

17. Robotic work tool according to claim 15 or claim 16, wherein the sensor (6a) is a Hall sensor.

18. Robotic work tool according to claim 15 or claim 16, wherein the sensor (6a) is a 3D magnetic sensor.

19. Robotic work tool according to any of claims 15 to 18, wherein the charging position sensor (6a) is arranged between a set of contacts (5a) in the charging means.
